# EUROPEAN PATENT SPECIFICATION

(11) **EP 1 659 877 B1**
(45) Date of publication and mention of the grant of the patent: **17.12.2008**
(21) Application number: 03818414.9
(22) Date of filing: 01.09.2003
(51) Int. Cl.: A23G 3/00

(54) **MILK-BASED CHEWY SWEET AND METHOD FOR ITS PRODUCTION**
KAUBARE SÜSSWARE AUF MILCHBASIS UND VERFAHREN ZU IHRER HERSTELLUNG
SUCRERIE A MASTIQUER A BASE DE LAIT ET PROCEDE DE PRODUCTION ASSOCIE

(43) Date of publication of application: 31.05.2006
(73) Proprietor: Leaf Italia S.R.L., 26100 Cremona-CR (IT)
(72) Inventor: MARTINCICH, Angelo, I-26100 Cremona-CR (IT); BERGOGNI, Roberto, I-26100 Cremona (IT); CHIODELLI, Luigi, Alberto, I-26100 Cremona (IT)
(74) Representative: Perani, Aurelio
(86) International application number: PCT/IT2003/000528
(87) International publication number: WO 2005/020701

(56) References cited:
- EP-A- 1 269 856
- US-A- 3 607 309
- US-A- 5 236 730
- US-A1- 2002 197 357
- US-A1- 2003 124 243

## Description

The present invention relates to a milk-based chewy sweet and to a method for its production.

Chewy sweets are known in the confectionery industry. They are produced by using gelatinising substances, in particular edible gelatine, which is added to a mixture of sugar syrup prepared by being boiled at over 100°C, to which mixture the required flavouring has been added.

After an optional step of aeration, the mass is poured into conventional starch moulds for formation of individual sweets, and is allowed to cool for the time necessary for the subsequent packaging.

For production of a milk-based chewy sweet, it is obviously necessary to add the milk or a substitute for it, to the mixture of syrup and gelatine.

However, because of the substantially high temperatures at which the gelatine is mixed with the sugar syrup, the problem arises of darkening of the mass obtained, and therefore of the sweet, caused by the occurrence of Maillard's reaction in the milk. The sweet would thus acquire a brown colouring, which could modify the final colouring required.

From US-3607309 a milk-based marsh-mallow product is known, which is produced by extrusion, and requires intense cooling for preventing darkening of the mass.

The object of the present invention is thus to solve the above-described problem such as to obtain a sweet which is at the same time chewy and milk-based, and in particular is white, such as to recall clearly the ingredient contained.

The problem is solved by means of the method according to the following claim 1.

The invention thus relates to a method comprising the step of addition of a gelatinising substance. The said gelatinising substance is preferably edible gelatine, and more preferably pork jelly, but use can be made of all natural or synthetic gelatinising substances which are known to persons skilled in the production of chewy sweets.

The step of addition of the gelatine is followed by addition to the mixture, of milk, which can be in the form of concentrated milk or alternatively powdered milk, suitably solubilised in water. The milk is preferably added as concentrated milk. Use of the term "milk" means any from amongst skimmed milk, half-fat milk and full-cream milk.

The method according to the invention thus makes it possible to obtain a milk-based chewy sweet which is generally white, owing to the colouring derived from the milk itself. It will be appreciated that, as is known to experts in the confectionery industry, further substances can be added to the mass, for example flavourings and/or dyes and/or juices of vegetable origin. Thus, according to the invention, before the pouring into the moulds takes place, appropriate substances may be added, so as to produce sweets which have a high percentage of milk, and have a white basis, but can optionally be provided with stripes or dots in a different colour. Alternatively, the milk-based sweet according to the invention can be coloured by means of the addition of suitable dyes selected. Flavourings can also be added, such as a peach or strawberry flavour, in order to produce sweets with a specific flavour.

The invention will now be described in greater detail with reference to some practical embodiments, provided purely by way of indicative and non-limiting example.

All the percentages are percentages by weight; in the method these are percentages by weight out of the total mass, and in the final sweet they are percentages by weight of the weight of the sweet obtained. Whenever the term "°Bx" is used, this means "Brix level", corresponding to the sugar content by means of evaluation of the optical activity of n grams of sugar out of 100 grams of solution at 20°C.

### Example 1

In a double-base stainless-steel container, a sugar syrup was prepared, consisting of 69 Kg of D.E. 38 glucose syrup and 31 Kg of sorbitol at 68°Bx, and was boiled until a refractometric residue of 85°Bx was obtained, i.e. at a temperature of 113°C.

To this syrup boiled at 85°Bx and heated to a temperature of 113°C there was added 150 Bls pork jelly (50% jelly + 50% water at 50°C), prepared at least 2 hours previously, and cut into pieces, in proportions of 17.6 Kg for 88 Kg sugar syrup. During this operation, heat was not applied to the double base. When the jelly had dissolved, there was addition of 27.1 Kg of very fine sugar, 0.375 Kg of 80% lactic acid, 0.110 Kg of milk flavouring and 0.038 Kg of cream flavouring.

At this point, 88 Kg of partially skimmed, sweetened concentrated milk with 5% fatty substances was added, with a refractometric residue of between 70 and 80 °Bx, which had been prepared separately and kept at ambient temperature. The addition of the above-described quantity of milk, equal to approximately 40% by weight of the mixture as a whole, and which was at ambient temperature, gave rise to further cooling of the mass which was already in the cooling stage. It was found that Maillard's reaction substantially did not occur, and the mass did not assume any brown colouring.

On completion of the mixing of the concentrated milk, the temperature of the mass was adjusted to 90°C, with small jets of steam applied to the double-base container. Subsequently, part of the mass was decanted into a mixer device and aerated with air blown in, up to a specific weight of 1.05. The two parts, i.e. the aerated part and the non-aerated part, with a refractometric residue of approximately 78°Bx, were poured into respective conventional starch boxes, with regulation of the temperature to 80°C, and a pouring speed equal to 10-15 boxes/minute.

On completion of the pouring operation, the boxes were transferred to the gelatinising chamber with a temperature of 20°C. After 24 hours the containers were transferred to an oven at 35°C for 18 hours in order to raise the Bx level, both of the part which had been aerated, and of that which had not been aerated, in order to assure the long-term stability of the product and to reduce the microbiological risk. For the part which had been aerated, the Bx level was increased to a value at least equal to 83.

The sweets obtained were removed from the starch containers after cooling which lasted for approximately 4 hours.

The sweets had a good milky-white colour. Those obtained from the mass subjected to aeration each weighed approximately 2.1 g, whereas those obtained from the mass which had not been aerated each weighed approximately 2.4 grams.

The packaging in a bag was carried out after 24 hours.

### Example 2

The components in example 1 were mixed in a double-base container, with the difference that, instead of the very fine sugar, 27.1 Kg of tapioca starch was added.

By adding dyes and juices, sweets provided with coloured stripes were obtained.

After the same operations as those illustrated with reference to Example 1, the sweets obtained had a substantially sandy structure.

### Example 3

In a double-base stainless-steel container, the same components as those indicated in Example 1 were mixed with 111.0 Kg of sugar syrup obtained by means of boiling at 113°C 72 Kg of glucose syrup and 58 Kg of sorbitol. The operative methods were the same as those illustrated with reference to Example 1.

The sweets obtained had a good milky-white colour, an excellent taste and a good level of softness.

### Example 4

In a double-base stainless-steel container there were poured 68 Kg of sugar syrup prepared by means of boiling at 113°C 18 Kg of glucose syrup and 63 Kg of sorbitol.

With the syrup there were mixed 13.2 Kg of 150 Bls pork jelly (50% jelly + 50% water at 50°C) prepared at least two hours before the mixing with the syrup. Finally, there were added 29.1 Kg of very fine sugar and 110 Kg of concentrated, partially skimmed, sweetened milk, with 5% fatty substances.

The operative methods were the same as those described with reference to Example 1.

The sweets obtained had a satisfactory required colour and consistency.

### Example 5

In a double-base stainless steel container there were inserted 68 Kg of syrup boiled at 113°C with the composition indicated in Example 4, and immediately afterwards a quantity of 29.1 Kg of the very fine sugar was added, and the mass was brought up to 115°C. After a short period of cooling of the free wall of the double base, the pork jelly was added in large pieces, with the composition indicated in the preceding Example 4, but prepared only one hour previously. No heating was applied whilst the jelly was dissolving. When the jelly had finished dissolving, 110.0 Kg of 5% sweetened, partially skimmed, concentrated milk was added and mixed in. The milk was at ambient temperature and lowered the temperature of the mass to 72°C.

This therefore prevented the occurrence of Maillard's reaction and darkening of the mass.

The subsequent operations were those described with reference to Example 1.

The sweets obtained had satisfactory colour and organoleptic characteristics.

### Example 6

111 Kg of sugar syrup boiled at 113°C, with a composition the same as that in Example 3, was introduced into a double-base stainless steel container. 17.6 Kg of jelly prepared like that in Example 5 was added to the syrup, and the operative conditions were the same as those in Example 5.

The sweets obtained had a satisfactory white colour and organoleptic characteristics.

### Example 7

Into a double-base stainless steel container, there were inserted 87 Kg of glucose syrup boiled at approximately 113°C, and which therefore had a refractometric residue of 85°Bx. 26.1 Kg of very fine sugar were then introduced, and the mixture of syrup and sugar was brought up to boiling point.

17.6 Kg of jelly were then added, with a composition of 50% jelly and 50% water at 60°C, prepared one hour previously.

The concentrated milk, which was partially skimmed, and sweetened, with 5% fatty substances, was added in a quantity of 87 Kg. The other components remained unchanged in comparison with those in Examples 1 to 6. The operative methods were those described in relation to the preceding Example 5.

### Example 8

Into a double-base stainless steel container, there were inserted 88 Kg of sugar syrup boiled at 113°C (85°Bx), the composition of which was that specified in Example 1. In the syrup there were inserted 17.6 Kg of pork jelly, like that in Example 7, prepared one hour previously. The very fine sugar was added in a quantity of 27.1 Kg, and the sweetened, partially skimmed, concentrated milk, with 5% fatty substances, was inserted in a quantity of 88 Kg. The other components remained unvaried, compared with Examples 1 to 7. The operative methods were those described in Example 5.

The sweets obtained had a good milky-white colour and organoleptic characteristics which were altogether satisfactory.

### Example 9

We repeated Example 1 exactly, adding 40 Kg of sweetened, partially skimmed, concentrated milk, instead of 88 Kg.

The sweets obtained had a good milky-white colour and organoleptic characteristics which were altogether satisfactory.

### Example 10

We repeated example 1, replacing with milk all of the 27.1 Kg of very fine sugar, and reducing the sorbitol by half to 15.5 Kg. The milk added was 150 Kg instead of 88 Kg.

The sweets obtained had a good milky-white colour and organoleptic characteristics which were altogether satisfactory.

### Example 11

We repeated example 1, replacing the sweetened, partially skimmed, concentrated milk, with the same amount of an aqueous solution of approximately 60% based on powdered milk.

The sweets obtained had satisfactory organoleptic properties equivalent to those obtained with the sweetened, concentrated milk.

### Table I

The present Table contains a comparison of the organoleptic and colour characteristics of the sweets obtained according to Examples 1 to 10.

The evaluation was carried out with a scale of values from 1 to 3, in which the value 1 represents the level which is scarcely sufficient for sale, the value 3 is the optimum level, and the value 2 is the medium level.

| | Ex.1 | Ex.2 | Ex.3 | Ex.4 | Ex.5 | Ex.6 | Ex.7 | Ex.8 | Ex.9 | Ex.10 | Ex.11 |
|---|---|---|---|---|---|---|---|---|---|---|---|
| Colour | 2 | 1 | 3 | 3 | 2 | 1 | 3 | 3 | 3 | 3 | 2 |
| Taste | 2 | 2 | 2 | 3 | 2 | 2 | 2 | 2 | 2 | 3 | 2 |
| Elasticity | 3 | 2 | 2 | 1 | 3 | 2 | 2 | 2 | 2 | 1 | 3 |
| Softness | 2 | 1 | 3 | 3 | 2 | 1 | 3 | 3 | 3 | 3 | 2 |
| Solubility | 2 | 2 | 3 | 3 | 2 | 2 | 3 | 3 | 3 | 3 | 2 |

As can be seen from the data contained in the table, by means of the method according to the invention it was possible to obtain a sweet with a basis of a white colour, which was at the same time soft like a chewy sweet, and easily soluble. In particular, the sweets in Examples 4 and 10, which contain a high percentage of milk, have optimum properties of colour, softness and solubility. The organoleptic properties of the sweet with coloured stripes produced according to Example 2 were satisfactory.

## Claims

1. Method for the production of milk-based chewy sweets, comprising a step of preparation of a sugar syrup by means of boiling at a temperature of between 100 and 120°C, a step in which the gelatinising substance is added to the boiled sugar syrup, a step of pouring the mass into moulds, and a step of gelatinising, **characterised in that** the gelatinising substance is added to the sugar syrup without applying heat, and **in that**, when the gelatinising substance has been dissolved in the syrup, the step of mixing the milk is carried out, the latter being kept at ambient temperature.

2. Method according to claim 2, wherein the milk is sweetened concentrated milk.

3. Method according to claim 2 or claim 3, wherein the gelatinising substance is edible pork jelly.

4. Method according to any one of claims 1 to 3, **characterised in that** after the said step of mixing the milk, there is a step of checking and regulation of the temperature of the mass, the latter being taken to, and kept at, approximately 90°C.

5. Method according to any one of claims 1 to 4, **characterised in that** it includes the step of aeration of at least part of the mass before it is poured into the moulds.

6. Method according to any one of claims 1 to 5, **characterised in that** the concentration of the mass during pouring into the moulds is kept at approximately 78°Bx.

7. Method according to any one of claims 1 to 6, **characterised in that** the milk mixed with the mass is in a quantity of between 20 and 70% by weight of the mass.

8. Method according to claim 7, **characterised in that** the said milk is concentrated milk, and has a refractometric residue of between 70°Bx and 80°Bx.

9. Method according to claims 1 to 8, **characterised in that** it includes at least one step of insertion and mixing of acidifying substances and/or flavouring substances and/or colouring substances and/or juices in the mass, before it is poured into the moulds.

10. Milk-based chewy sweet obtainable according to the method in claims 1 to 9.

11. Milk-based chewy sweet according to claim 10, comprising at least 1 to 10% gelatinising substance and at least 20 to 70% milk.

12. Milk-based chewy sweet according to claim 11, comprising at the most 50% milk.

13. Milk-based chewy sweet according to any one of claims 10-12, additionally comprising at least 20 to 80% sugar syrup.

14. Milk-based chewy sweet according to any one of claims 10-13, additionally comprising at the most 15% very fine sugar.

15. Milk-based chewy sweet according to any one of claims 10-14, wherein the gelatinising substance is edible gelatine.

16. Milk-based chewy sweet according to claim 15, wherein the gelatinising substance is edible pork jelly.

17. Milk-based chewy sweet according to any one of claims 10 to 16, wherein the milk is sweetened concentrated milk

18. Milk-based chewy sweet according to any one of claims 10 to 16, wherein the milk is an aqueous solution of powdered milk.

## Patentansprüche

1. Methode für die Herstellung eines Kaubonbons auf Milchbasis, welche einen Schritt der Vorbereitung eines Zuckersirups durch Kochen bei einer Temperatur zwischen 100 und 120°C umfasst, sowie einen Schritt, bei welchem die gelatinierende Substanz dem gekochten Zuckersirup hinzugefügt wird, und einen Schritt, bei welchem die Masse in Formen gegossen wird; **dadurch gekennzeichnet, dass** die gelatinierende Substanz dem Zuckersirup ohne Hitzeanwendung hinzugefügt wird, sowie **dadurch**, dass, nachdem sich die gelatinierende Substanz in dem Sirup aufgelöst hat, der Schritt der Untermischung der Milch ausgeführt wird, wobei die letztere bei Raumtemperatur gelagert wird.

2. Methode nach Anspruch 1, bei welcher es sich bei der Milch um gesüßte konzentrierte Milch handelt.

3. Methode nach Anspruch 2 oder 3, bei welcher es sich bei der gelatinierenden Substanz um essbare Schweingelatine handelt.

4. Methode nach jedem der Ansprüche 1 bis 3, **dadurch gekennzeichnet, dass** nach dem Schritt der Untermischung der Milch ein Schritt für die Kontrolle und Regulierung der Temperatur der Masse stattfindet, wobei die letztere bis auf ungefähr 90°C gebracht wird und dort beibehalten wird.

5. Methode nach jedem der Ansprüche 1 bis 4, **dadurch gekennzeichnet, dass** sie einen Schritt der Aufschäumung von mindestens einem Teil der Masse umfasst, bevor sie in die Formen gegossen wird.

6. Methode nach jedem der Ansprüche 1 bis 5, **dadurch gekennzeichnet, dass** die Konzentration der Masse während des Gießvorgangs in die Formen bei ungefähr 78°Bx gehalten wird.

7. Methode nach jedem der Ansprüche 1 bis 6, **dadurch gekennzeichnet, dass** die mit der Masse vermischte Milch zwischen 20 und 70% des Gewichts der Masse besitzt.

8. Methode nach Anspruch 7, **dadurch gekennzeichnet, dass** es sich bei der besagten Milch um konzentrierte Milch handelt und einen refraktometrischen Rückstand von zwischen 70°Bx und 80°Bx besitzt.

9. Methode nach Anspruch 1 bis 8, **dadurch gekennzeichnet, dass** sie mindestens einen Schritt des Hinzufügens und Untermischens von Säuerungssubstanzen und/oder Geschmacksstoffen und/oder Farbstoffen und/oder Fruchtsäften in die Masse umfasst, bevor sie in die Formen gegossen wird.

10. Kaubonbon auf Milchbasis, welches nach der Methode der Ansprüche 1 bis 9 erhalten wird.

11. Kaubonbon auf Milchbasis nach Anspruch 10, welches mindestens von 1 bis zu 10% gelatinierende Substanz und mindestens von 20 bis zu 70% Milch enthält.

12. Kaubonbon auf Milchbasis nach Anspruch 11, welches höchstens 50% Milch enthält.

13. Kaubonbon auf Milchbasis nach jedem der Ansprüche 10-12, welches zusätzlich von mindestens 20 bis zu 80% Zuckersirup enthält.

14. Kaubonbon auf Milchbasis nach jedem der Ansprüche 10-13, welches zusätzlich höchstens 15% sehr feinen Zucker enthält.

15. Kaubonbon auf Milchbasis nach jedem der Ansprüche 10-14, bei welchem es sich bei der gelatinierenden Substanz um essbare Gelatine handelt.

16. Kaubonbon auf Milchbasis nach Anspruch 15, bei welchem es sich bei der gelatinierenden Substanz um essbare Schweingelatine handelt.

17. Kaubonbon auf Milchbasis nach jedem der Ansprüche 10-16, bei welchem es sich bei der Milch um gesüßte konzentrierte Milch handelt.

18. Kaubonbon auf Milchbasis nach jedem der Ansprüche 10-16, bei welchem es sich bei der Milch um eine wässrige Lösung von Milchpulver handelt.

## Revendications

1. Méthode de fabrication de bonbons à mâcher à base de lait, comportant une étape de préparation d'un sirop de sucre par ébullition à une température comprise entre 100°C et 120°C, une étape pendant laquelle la substance gélifiante est ajoutée au sirop de sucre bouilli, une étape de versement de la masse dans des moules, et une étape de gélatinisation, **caractérisée en ce que** la substance gélifiante est ajoutée au sirop de sucre sans qu'aucune chaleur y soit appliquée, et **en ce que**, quand la substance gélifiante s'est dissolue dans le sirop, l'étape de mélanger le lait est exécutée, ce-dernier étant tenu à la température ambiante.

2. Méthode selon la revendication 2, **caractérisée en ce que** le lait est du lait concentré sucré.

3. MÉTHODE selon la revendication 2 ou la revendication 3, **caractérisée en ce que** la substance gélifiante est de la gélatine de porc comestible.

4. Méthode selon n'importe quelle des revendications 1 à 3, **caractérisée en ce qu'**après l'étape de mélange du lait susdite, il y a une étape de contrôle et réglage de la température de la masse, cette-dernière étant portée et tenue à environ 90°C.

5. Méthode selon l'une quelconque des revendications 1 à 4, **caractérisée en ce qu'**elle inclut l'étape d'aération d'au moins une partie de la masse avant qu'elle ne soit versée dans les moules.

6. Méthode selon l'une quelconque des revendications 1 à 5, **caractérisée en ce que** la concentration de la masse pendant son versement dans les moules est tenue à environ 78°Bx.

7. Méthode selon l'une quelconque des revendications 1 à 6, **caractérisée en ce que** le lait mélangé avec la masse est dans une quantité de 20 à 70% du poids de la masse.

8. Méthode selon la revendication 7, **caractérisée en ce que** le lait susdit est du lait concentré et qu'il a un résidu réfractométrique de 70°Bx à 80°Bx.

9. Méthode selon les revendications 1 à 8, **caractérisée en ce qu'**elle inclut au moins une étape d'incorporation et mélange de substances acidifiantes et/ou substances aromatisantes et/ou substances colorantes et/ou jus dans la masse, avant qu'elle ne soit versée dans les moules.

10. Bonbon à mâcher à base de lait pouvant être obtenu selon la méthode dans les revendications 1 à 9.

11. Bonbon à mâcher à base de lait selon la revendication 10, comportant au moins 1 à 10% de substance gélifiante et au moins 20 à 70% de lait.

12. Bonbon à mâcher à base de lait selon la revendication 11, comportant pas plus de 50% de lait.

13. Bonbon à mâcher à base de lait selon n'importe quelle des revendications 10 à 12, comportant aussi au moins 20 à 80% de sirop de sucre.

14. Bonbon à mâcher à base de lait l'une quelconque des revendications 10 à 13, comportant aussi pas plus de 15% de sucre très raffiné.

15. Bonbon à mâcher à base de lait l'une quelconque des revendications 10 à 14, **caractérisé en ce que** la substance gélifiante est de la gélatine comestible.

16. Bonbon à mâcher à base de lait selon la revendication 15, **caractérisé en ce que** la substance gélifiante est de la gélatine de porc comestible.

17. Bonbon à mâcher à base de lait l'une quelconque des revendications 10 à 16, **caractérisé en ce que** le lait est du lait concentré sucré.

18. Bonbon à mâcher à base de lait selon n'importe quelle des revendications 10 à 16, **caractérisé en ce que** le lait est une solution aqueuse de lait en poudre.
